# EUROPÄISCHE PATENTSCHRIFT

(11) **EP 1 371 229 B1**
(45) Veröffentlichungstag und Bekanntmachung des Hinweises auf die Patenterteilung: **24.05.2006**
(21) Anmeldenummer: 02729802.5
(22) Anmeldetag: 19.03.2002
(51) Int. Cl.: H04N 7/26

(54) **VERFAHREN ZUR KOMPRIMIERUNG UND DEKOMPRIMIERUNG VON VIDEODATEN**
METHOD FOR COMPRESSING AND DECOMPRESSING VIDEO DATA
PROCEDE DE COMPRESSION ET DE DECOMPRESSION DE DONNEES VIDEO

(30) Priorität: 21.03.2001 DE 10113880
(43) Veröffentlichungstag der Anmeldung: 17.12.2003
(73) Patentinhaber: T-Mobile Deutschland GmbH, 53227 Bonn (DE)
(72) Erfinder: MOSSAKOWSKI, Gerd, 59227 Ahlen (DE)
(74) Vertreter: Riebling, Peter
(86) Internationale Anmeldenummer: PCT/DE2002/000987
(87) Internationale Veröffentlichungsnummer: WO 2002/078352

(56) Entgegenhaltungen:
- US-A- 5 647 024
- US-A- 5 675 669
- SIMON S: "Generalized run-length coding for SNR-scalable image compression" SIGNAL PROCESSING VII, THEORIES AND APPLICATIONS. PROCEEDINGS OF EUSIPCO-94. SEVENTH EUROPEAN SIGNAL PROCESSING CONFERENCE, PROCEEDINGS OF EUSIPCO-94 - 7TH EUROPEAN SIGNAL PROCESSING CONFERENCE, EDINBURGH, UK, 13-16 SEPT. 1994, Seiten 560-563 vol.1, XP008007229 1994, Lausanne, Switzerland, Eur. Assoc. Signal Process, Switzerland
- CARLSSON S: "SKETCH BASED CODING OF GREY LEVEL IMAGES" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, Bd. 15, Nr. 1, 1. Juli 1988 (1988-07-01), Seiten 57-83, XP000001795 ISSN: 0165-1684
- YAN J K ET AL: "ENCODING OF IMAGES BASED ON A TWO-COMPONENT SOURCE MODEL" IEEE TRANSACTIONS ON COMMUNICATIONS, IEEE INC. NEW YORK, US, Bd. 25, Nr. 11, 1. November 1977 (1977-11-01), Seiten 1315-1322, XP000644936 ISSN: 0090-6778
- KUNT M ET AL: "SECOND-GENERATION IMAGE-CODING TECHNIQUES" PROCEEDINGS OF THE IEEE, IEEE. NEW YORK, US, Bd. 73, Nr. 4, 1. April 1985 (1985-04-01), Seiten 549-574, XP000611041 ISSN: 0018-9219
- PATENT ABSTRACTS OF JAPAN vol. 017, no. 710 (E-1484), 24. Dezember 1993 (1993-12-24) & JP 05 244435 A (FUJITSU LTD), 21. September 1993 (1993-09-21)
- CHEE Y-K: "SURVEY OF PROGRESSIVE IMAGE TRANSMISSION METHODS" INTERNATIONAL JOURNAL OF IMAGING SYSTEMS AND TECHNOLOGY, WILEY AND SONS, NEW YORK, US, Bd. 10, Nr. 1, 1999, Seiten 3-19, XP000805935 ISSN: 0899-9457
- BELL D M ET AL: "PROGRESSIVE TECHNIQUE FOR HUMAN FACE ARCHIVING AND RETRIEVAL" JOURNAL OF ELECTRONIC IMAGING, SPIE + IS&T, US, Bd. 5, Nr. 2, 1. April 1996 (1996-04-01), Seiten 191-197, XP000596290 ISSN: 1017-9909
- MARSHALL S: "APPLICATION OF IMAGE CONTOURS TO THREE ASPECTS OF IMAGE PROCESSING: COMPRESSION, SHAPE RECOGNITION AND STEREOPSIS" IEE PROCEEDINGS I. SOLID- STATE & ELECTRON DEVICES, INSTITUTION OF ELECTRICAL ENGINEERS. STEVENAGE, GB, Bd. 139, Nr. 1 PART 1, 1. Februar 1992 (1992-02-01), Seiten 1-8, XP000292350 ISSN: 0956-3776

## Beschreibung

Die Erfindung beschreibt ein Verfahren zur Komprimierung und Dekomprimierung von Videodaten

Videos erzeugen große Datenmengen. Um diese Datenmengen effektiv zu übertragen und abzuspeichern, ist es sinnvoll diese zu komprimieren.

Nach der heutigen Stand der Technik werden Videosignale in einer schnellen Abfolge von Einzelbildern aufgenommen und wiedergegeben. Beim Fernsehen (PAL-Norm) sind dies 25 Bilder pro Sekunde, bzw. 50 Halbbilder. Bei digitalen Aufnahmen sind das bis ca. 30 Bilder pro Sekunden. Jedes Bild wird in Zeilen zerlegt, und zunächst sequentiell übertragen.

Bisherige Komprimierungsmethoden basieren im wesentlichen auf der Reduzierung der Auflösung, der Farbtiefe und der Verringerung der Anzahl der Bilder pro Sekunde. Bei der digitalen Kompression, z.B. den MPEG-Verfahren, werden anstelle von kompletten Bildern im wesentlichen die Differenzbilder, d.h. die Unterschiede der einzelnen Bildpunkte (Pixel) im Vergleich zum vorherigen Bild, anstelle der Komplettbilder übertragen. Der neueste Standart für Videokodierung ist MPEG4.
MPEG ist die Abkürzung für "Motion Pictures Expert Group". Von dieser Gruppe wurden bzw. werden Dateiformate und Verfahren zum platzsparenden Komprimieren und Speichern von Video- bzw. Multimediadaten (Video, Bild- und Tondaten) in hoher Qualität festlegt. Der MPEG-Standard unterteilt sich inzwischen in MPEG-1, MPEG-2, MPEG-3 und MPEG-4 , wobei der MPEG-3-Standard mittlerweile in MPEG-2 integriert wurde.
Um die riesige Datenmenge von Filmen mit "normalen" Computern verarbeiten und transportieren zu können, werden nur die Veränderungen zum Vorgängerbild abgespeichert. Das MPEG-Format speichert in regelmäßigen Abständen von typischerweise zwölf Bildern sogenannte Intra-Frames ab; das sind JPEG-komprimierte Einzelbilder. Die Bilder zwischen diesen I-Frames werden nach Möglichkeit nicht komplett abgelegt. Vielmehr speichert MPEG, wie man sie durch Verschieben von Teilen aus vorangehenden oder nachfolgenden Bildern zurückgewinnen kann. Dazu werden auch vorausschauende "Predicted Frames" und "B-Frames" (Bi-directionale Frames) verwendet. Da das aber nie perfekt klappt, werden zusätzlich pro Bild die verbleibende Abweichung noch JPEG-kodiert abgespeichert. Mit dieser Methode lässt sich der Datenaufwand für einen Video-Film um etwa 99% verringern. Die mögliche Kompression geht bis 200:1.
MPEG-1 wurde für flüssige Video-Wiedergaben entworfen. Die MPEG-1-Komprimierung bzw. Dekomprimierung war ursprünglich ein hardwareabhängiges Verfahren. Es ist allerdings mittlerweile, dank der schnellen Prozessoren, auch ein Softwaredekomprimieren möglich.
Der wesentliche Unterschied zwischen MPEG-1 und MPEG-2 besteht darin, daß MPEG-2 besser mit dem beim Fernsehen eingesetzten Zeilensprungverfahren (Interlace) umgehen kann. Das Geheimnis von MPEG-2 liegt in der Kompression auf höchster Qualitätsstufe, so daß Filmmaterial nahezu 1 zu 1 in Studioqualität bearbeitet und editiert werden kann. Konsequenterweise etablierte sich MPEG-2 zu einem Standard. Bei einer reinen I-Framecodierung lässt sich MPEG-2 sogar im Schnittbetrieb einsetzen. Der Teil des MPEG-3-Standard, der für High Definition TV-Qualität (HDTV) vorgesehen war, wurde mittlerweile in den MPEG-2-Standard implementiert.
MPEG-4 ist eine Weiterentwicklung des MPEG-2-Formats und befindet sich seit 1996 in der Entwicklung. Obwohl MPEG-4 ursprünglich als ein Codierungsstandard für audiovisuelle Daten mit sehr niedriger Bitrate gedacht war, diente die Entwicklung weit mehr Zwecken als lediglich dem Streaming von linearen Mediendaten bei Internet- und drahtlosen Anwendungen. MPEG-4 stellt z.B. effiziente Mechanismen zur Komprimierung und Distribution interaktiver Medieninhalte bereit. Außerdem verfügt MPEG-4 über 3D-Potentiale, um künstliche Intelligenzen zu visualisieren oder Avantare darzustellen, z.B. im Rahmen von Videokonferenzen.
Die Kompressionsrate ist bei MPEG-4 höher als bei MPEG-2, wobei "Sprites" besser komprimiert werden können, weil dem Codier-Mechanismus dafür wesentlich mehr Zeit zur Verfügung steht. Eventuell kann dabei sogar auf Wavelets umgeschaltet werden. Die Skriptsprache ermöglicht es, in wenigen Bytes Operationen wie "verschieben" wesentlich schneller durchzuführen, als es die digitalisierte komprimierte Form der gleichen Operation ermöglichen würde. Mit Hilfe dieser "Sprites" können beliebig konturierte Standbilder über sich bewegende Bilder geschoben werden.

Der Artikel von SIMON, S.: "Generalized Run-Length Coding for SNR-scalable Image Compression", in Signal Processing VII: Theories and Applications, Proceedings of Eusipco-94, Seventh European Signal Processing Conference, Edinburgh, UK, 13-16 Sept. 1994, Seiten 560-563, XP008007229, offenbart ein Verfahren zur Komprimierung von Bilddaten, die aus einem Array einzelner Bildpunkte (Pixel) bestehen, wobei jedes Pixel einen Pixelwert aufweist, der Farb- oder Helligkeitsinformation des Pixels beschreibt. Zur Komprimierung der Bilddaten werden Verfahren auf Basis einer Lauflängencodierung vorgeschlagen.

Die Aufgabe der Erfindung liegt in der Schaffung eines Verfahrens zur Komprimierung von Videodaten, welches eine einfache und flexible Anpassung an unterschiedliche Übertragungsraten bzw. -bandbreite, Bildauflösungen und Displaygrößen erlaubt.

Diese Aufgabe wird durch die Merkmale des Patentanspruchs 1 gelöst.

Vorteilhafte Ausgestaltungen und Weiterbildungen der Erfindung sind in den Unteransprüchen angegeben.

Vorzugsweise erfolgt eine parallele Verarbeitung der Videoinformationen im Videoaufnahmechip. Die parallele Verarbeitung dient dem Zweck, zunächst die wichtigsten Pixel zu ermitteln und diese entsprechend einer Priorisierung in ein Prioritätenarray abzulegen. Dieses Array enthält zu jedem Zeitpunkt, die nach der Priorisierung sortierten Pixelwerte. Entsprechend der Priorisierung werden diese Pixel, und die für die Berechnung der Priorisierung benutzten Pixelwerte, übertragen bzw. abgespeichert. Ein Pixel bekommt eine hohe Priorität, wenn die Unterschiede zu seinen benachbarten Pixel sehr groß sind.

Zur Rekonstruktion werden die jeweils aktuellen Pixelwerte auf dem Display dargestellt. Die noch nicht übertragenden Pixel werden aus den schon übertragenden Pixel berechnet.

Entsprechend der Rechenleistung, der Übertragungsbandbreite und der Größe des Displays können unterschiedliche Verfahren zur Berechnung der noch nicht übertragenen Pixel eingesetzt werden. Steht eine sehr große Bandbreite zur Verfügung kann eine einfache lineare Interpolation durchgeführt werden. Steht nur eine sehr kleine Bandbreite zur Verfügung, kann dies bei der Übertragung der priorisierten Pixel berücksichtigt werden.

Durch den Historienverlauf der übertragenden Pixel können Objekte identifiziert, und damit eine Bewegungsabschätzung dieser Objekte durchgeführt werden.

Der Grundgedanke des Verfahrens basiert auf der priorisierten Pixelspeicherung bzw. Übertragung. Bei der Abspeicherung bzw. der Videoübertragung müssen ferner die zeitlichen und positionellen (innerhalb des Bildarrays) Abhängigkeiten der einzelnen Pixel oder in Pixelgruppen zusammengefassten Pixel berücksichtigt werden.

Um eine extreme hohe Datenkompression zu erzielen werden jeweils die Pixelgruppen übertragen, die die höchste Priorität haben, und bisher noch nicht übertragen worden sind. Die Flächen, d.h. die Pixelwerte zwischen den schon übertragenden Pixelgruppen werden aus den schon übertragenden Pixelgruppen berechnet, z.B. durch Interpolation. Bei höherer Auflösung (größeres Bildarray) steigt der erreichbare Kompressionsfaktor, da bei natürlichen Aufnahmen größere Flächen meist einen gut vorhersagbaren (gleichmäßigen) Farbverlauf haben, z.B. blauer Himmel.

Zu beachten ist auch, dass jeweils die exakten Pixelwerte übertragen werden. Falls erforderlich erlaubt dies Verfahren eine verlustfreie Übertragung der Videoinformationen.

Die Widerherstellung bzw. Rekonstruktion der Videodaten beruht auf Abschätzungen ähnlich des menschlichen Sehverhaltens. Der Mensch nimmt Reize war, aber die Interpretation was er auf diesem Bild erkennt, findet erst in seinem Gehirn statt. Die Reize entsprechen den übertragenen Pixelgruppen, die Interpretation entspricht dem Ausfüllen der Flächen zwischen den noch nicht übertragenen Pixelgruppen.

Um dieses zu realisieren, können zusätzliche Arrays angelegt werden. Dies sind unter anderem ein Array in welchem die Information vorhanden ist, aus welchen Pixelgruppen der Pixelwert an der aktuellen Position ermittelt wurde. Weitere Informationen können sein, wann diese Werte berechnet worden sind, aus welchen Pixelgruppen diese berechnet bzw. übertragen worden sind. Auch eine Einschätzung über die Genauigkeit der Werte (z.B. Berechnung aus direkt benachbarten Pixel, geringe Varianz der zur Berechnung zugrunde liegenden Pixel) kann als zusätzliche Information ausgewertet werden.

Das beschriebene Verfahren erlaubt eine wesentlich einfachere Anpassung des Videodatenstroms an unterschiedliche Displaygrößen und Bildauflösungen.

Ein weitere Vorteil ist, dass durch die beschriebene Art der Kodierung des Videos nicht automatisch festgelegt wird, mit welchen Algorithmen das Video dekodiert werden muss. Dies wird durch Übertragung der priorisierten Pixelwerte erreicht, die entgegen bei anderen Verfahren keine Mittelwertbildung erfahren. Hersteller haben damit die Möglichkeit Low bis High Cost Endgeräte zu entwickeln und sich durch unterschiedliche Algorithmen vom Mitkonkurrenten hervorzuheben.

Die angestrebte massiv-parallele Verarbeitung der Videodaten in einem speziell dafür entwickelten Chip erlaubt es, extrem niedrigen Taktraten zu verwenden, was sich günstig auf den Stromverbrauch auswirkt.

Durch Priorisierung können bestimmte Bereiche des Videos (z.B. Lippen bei Nachrichtensprechern) mit einer höheren Priorität und folglich einer besseren Auflösung übertragen werden.

Das Verfahren erlaubt es, aus dem Datenstrom des Videos für unterschiedliche Endgeräte die optimalen Teildatenströme herauszufiltern, ohne das dies bei der Videoaufnahme berücksichtigt werden muss.

Ein Ausführungsbeispiel der Erfindung wird anhand der Zeichnungsfiguren näher erläutert. Aus den Zeichnungen und deren Beschreibung ergeben sich weitere Merkmale, Vorteile und Anwendungsmöglichkeiten der Erfindung. Es zeigt:
- Figur 1:: Darstellung eines Bildarrays aus 20 x 21 Pixeln;
- Figur 2:: Darstellung verschiedener Formen von Pixelgruppen;
- Figur 3:: Bildarray mit bewegtem Objekt zu einem Zeitpunkt t1;
- Figur 4:: Bildarray mit bewegtem Objekt zu einem Zeitpunkt t2;
- Figur 5:: Bildarray mit bewegtem Objekt zu einem Zeitpunkt t3;
- Figur 6:: Neu generiertes Bildarray mit eingefügten Pixelgruppen in der Bildecke;
- Figur 7:: Ausfüllen der Flächen zwischen den bereits eingefügten Pixelgruppen;
- Figur 8:: Einfügen weitere Pixelgruppen und Ausfüllen der dazwischenliegenden Flächen.

Nachfolgend wird anhand eines exemplarischen Beispiels eine Komprimierung und Dekomprimierung eines Videosignals beschrieben.

### Folgende Annahmen werden getroffen:

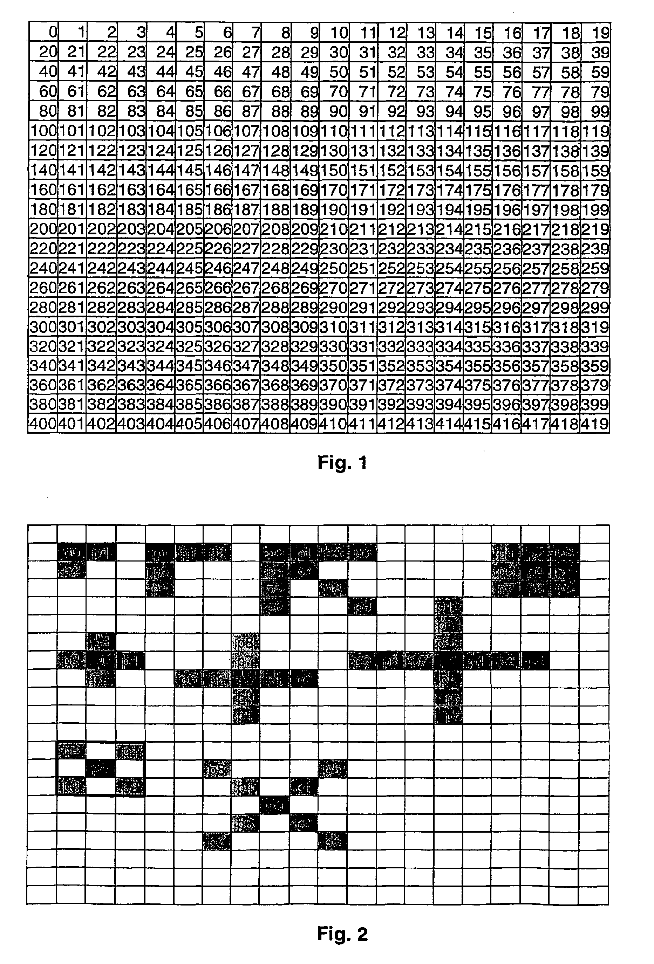

Als Videoquelle steht ein derzeit übliches Videosignal zur Verfügung (z.B. PAL oder NTSC). Die Videoinformation kann mit einer handelsüblichen elektronischen Einrichtung (z.B. Framegrabber-Karte) ausgelesen werden. Zur Veranschaulichung des Verfahrens wird im folgenden ein minimiertes Bildarray mit einer Breite von 20 Pixel und einer Höhe von 21 Pixel verwendet (Figur 1). Jedes Pixel des Arrays wird durch einen 32 Bit Wert (Pixelwert) repräsentiert. Die 32 Bit sind z.B. in 4 Werte (Transparent, Rot, Grün, Blau) mit jeweils 8 Bit aufgeteilt. Die Position der Pixel ist durch eine Integer Zahl festgelegt. Das Bildarray wird in der in Figur 1 gezeigten Weise von 0 bis 419 durchgezählt. Die Zahl innerhalb jedes Kastens entspricht der Position des zugehörigen Pixels. Zwischen der Quelle und Senke besteht eine UDP (User Datagramm Protocol) Verbindung. Über diese werden dann die komprimierten Videodaten geschickt.

### Die Komprimierung des Videosignals erfolgt folgendermaßen:

Das Verfahren beruht darauf, dass ständig eine Priorisierung der einzelnen Pixel des Videosignals erfolgt, wobei die Pixel entsprechend ihrer Priorisierung in ein Array abgelegt werden. Dieses Array enthält zu jedem Zeitpunkt, die aktuellen, nach Priorität sortierten Pixelwerte. Ein Pixel bekommt eine hohe Priorität, wenn die Unterschiede zu seinen benachbarten Pixel sehr groß sind. Das Pixel wird zusammen mit seinen für die Berechnung verwendeten Nachbarpixeln zu einer Pixelgruppe zusammengefasst. Entsprechend der Priorisierung werden diese Pixelgruppen übertragen bzw. abgespeichert.

### Bildarray einlesen

Der Framegrabber hat zu jedem Zeitpunkt das jeweils aktuelle Bild in seinem Bildarray das wie in Figur 1 gezeigt beispielsweise ein 20 x 21 Pixel großes Bildarray sein kann. Jedes Pixel ist durch seine Position (0 bis 419) und seinen Pixelwert (Farb- bzw. Helligkeitswert) definiert.

### Pixelgruppen festlegen

Zuvor wurde festgelegt, welche benachbarten Pixel eine Pixelgruppe bilden. Mit p0 ist dabei dasjenige Pixel bezeichnet, das die Position der Pixelgruppe angibt und für das die Priorität berechnet wird. Die relative Position der übrigen Pixel, z.B. p1-p4, einer Pixelgruppe zum Bezugspixel p0 ergibt sich aus der verwendeten Art (Form) der Pixelgruppe. In Figur 2 sind exemplarisch einige mögliche Formen von Pixelgruppen dargestellt. Es können sowohl zum Bezugspixel p0 symmetrische als auch unsymmetrische Pixelgruppen gebildet werden. Welche Art von Pixelgruppe verwendet wird, ist u.a. von der Art des Bildmaterials und der angestrebten Kompressionsrate abhängig. In der Regel ist der zu erreichende Kompressionsfaktor umso größer, je mehr Pixel eine Pixelgruppe umfasst. Zum kodieren und dekodieren, d.h. komprimieren und dekomprimieren des Videobildes muss die gleiche Form von Pixelgruppen verwendet werden.

### Prioritätswerte ermitteln

Für jedes Pixel p0 einer Pixelgruppe wird nun die Priorität in Bezug auf dessen Pixelgruppe berechnet. Dabei wird jedes Pixel 0 - 419 des Bildes einmal zum Bezugspixel p0. Dabei ist erfindungsgemäß vorgesehen, dass die Berechnung der Prioritätswerte der Pixel soweit wie möglich im Rahmen einer parallelen Datenverarbeitung durchgeführt wird. Optimal ist, wenn die Berechnung der Prioritäten aller Pixel des Bildes gleichzeitig erfolgt. Das es sich um ein Videosignal handelt, werden die Prioritätswerte aller Pixel ständig neu berechnet, da sich der Bildinhalt laufend ändert. Die Vielzahl der Pixelgruppen, insbesondere die mit niedrigerer Priorisierung, werden sich aber mit einer hohen Wahrscheinlichkeit nicht ändern.
Zur Berechnung der Priorität kann es verschiedene Rechenmethoden geben. Exemplarisch wird hier eine lineare Methode verwendet.
Dazu werden die einzelnen Pixelwerte P0, P1, P2, P3 und P4 einer Pixelgruppe in ihre Farbanteile Rot, Grün und Blau zerlegt. Jeder dieser Farbwerte wird durch 8 Bit repräsentiert. Für jede Farbe eines jeden Pixels P1-P4 wird nun ein Farbdifferenzwert in Bezug auf P0 ermittelt,
z.B. P0_rot - P1_rot, P0_rot - P2_rot, ... , P0_blau - P4_blau. Die absoluten Farbdifferenzwerte werden addiert und durch die Anzahl der Farben und Anzahl der betrachteten Pixel geteilt. Das Ergebnis ist ein Prioritätswert für die betrachtete Pixelgruppe. Dieser Prioritätswert ist umso höher, je unterschiedlicher die Farbwerte der einzelnen Pixel der Pixelgruppe sind.

Weitere Methoden zur Ermittlung des Prioritätswert sind die Benutzung von Grauwerten oder der Maximalwert einer Farbdifferenz einer Farbe. Da der Prioritätswert später selbst nicht übertragen, bzw. abgespeichert wird, hat das Verfahren zur Ermittlung des Prioritätswert keinen direkten Einfluss auf die Dekodierung.

Durch diese Priorisierung wird erreicht, dass Bildbereiche, die einen großen Farb- oder Kontrastwechsel aufweisen, wie z.B. Kanten, eine hohe Priorität erhalten, und relativ gleichbleibende Bildinhalte, wie z.B. blauer Himmel, eine Niedrige.

### Prioritätswerte sortieren

In diesem Schritt werden die Prioritätswerte der Größe nach absteigend sortiert. Die Sortierung erfolgt nach Ermittlung jedes neuen Prioritätswertes Für jeden Zeitpunkt besitzt man somit eine nach Prioritäten geordnete Liste von Pixelgruppen die absteigend sortiert ist. Es ist anzustreben, dass entsprechende Bildaufnehmer (CCD-Chips) entwickelt werden, welche unmittelbar eine solche nach Prioritäten geordnete Liste bereitstellen.
Wird das zu komprimierende Bild direkt mit einer CCD Kamera oder einem Scanner aufgenommen, besteht prinzipiell die Möglichkeit, aus dem in der Kamera / dem Scanner vorhandenen, bildbearbeitenden Mikrochip direkt ein nach Prioritäten sortiertes Array zu erhalten. Somit wird beim komprimieren ein wesentlicher Teil des Rechenaufwandes eingespart.

### Aktualisieren der Prioritätswerte

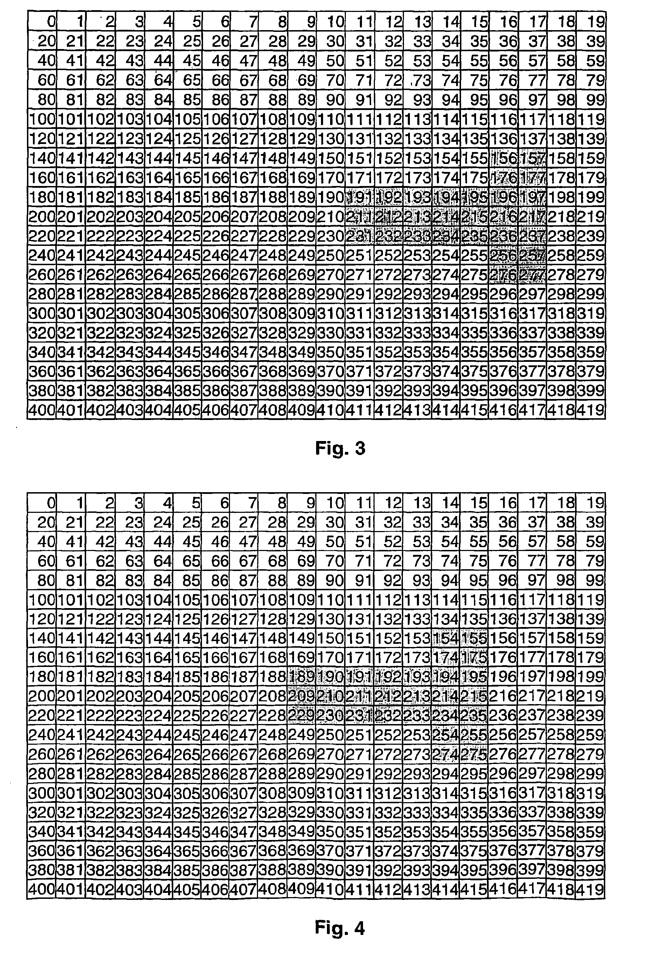

Im Gegensatz zu Standbildern (z.B. Fotografien) ergibt sich bei Videoinformationen eine ständig wechselnde Prioritätsänderung der Pixelgruppen, z.B. bei Kameraschwenk oder bewegten Objekten. Um dies zu verdeutlichen ist in den Figuren 3 bis 5 ein Videobildarray zu verschiedenen Zeitpunkten t1 bis t3 dargestellt, wobei sich ein Objekt von rechts nach links verschiebt.

Gemäß Figur 2 enthält das Bild zum Zeitpunkt t1 ein Objekt, das die Pixel 156, 157,176,177,191-197,211-217,231-237,256,257,276,277 ausfüllt.
Für die Berechnung der Prioritäten der Pixel (0-419) des Bildes wird die in Figur 2 dick umrandeten Form der Pixelgruppe (links unten) verwendet.
Es ergibt sich eine Prioritätsverteilung der Pixel, wie sie In der weiteren Beschreibung des Verfahrens beispielhaft in Tabelle 1 zum Zeitpunkt t1 dargestellt ist. Die Tabelle enthält jeweils nur die Nummer des Bezugspixels (p0) einer Pixelgruppe. Diejenigen Pixelgruppen, die sich im Randbereich des Objektes befinden und bei denen das jeweilige Bezugspixel (p0) den größten Unterschied zu den übrigen Pixeln der Pixelgruppe aufweist, bekommen die höchste Priorität A. Die Pixelgruppen, deren Bezugspixel einen geringeren Unterschied zu den übrigen Pixeln der Pixelgruppe aufweisen bekommen eine mittlere Priorität B und diejenigen Pixelgruppen, deren Bezugspixel gar keinen Unterschied zu den übrigen Pixeln der Pixelgruppe aufweisen die niedrigste Priorität C.

**Tabelle 1**

| | Priorität A | Priorität B | Priorität C |
|---|---|---|---|
| Zeitpunkt t1 | 175,255,231,191, 156,157,277,276 | 177,197,217,237,257, 176,256,211,192, ... | 0,1,2,3,4,5,6,7,8,9,10,11,12,13,14,15, ... |
| Zeitpunkt t2 | 189,173,154,155, 274,275,253,229 | 175,195,215,235,255, 190,191,192,193, ... | 0,1,2,3,4,5,6,7,8,9,10,11, 12,13,14,15, ... |
| Zeitpunkt t3 | 187,171,227,251, 152,153,272,273 | 173,193,213,233,253, 188,189,190,191, ... | 0,1,2,3,4,5,6,7,8,9,10,11,12,13,14,15, ... |
| ... | ... | ... | ... |

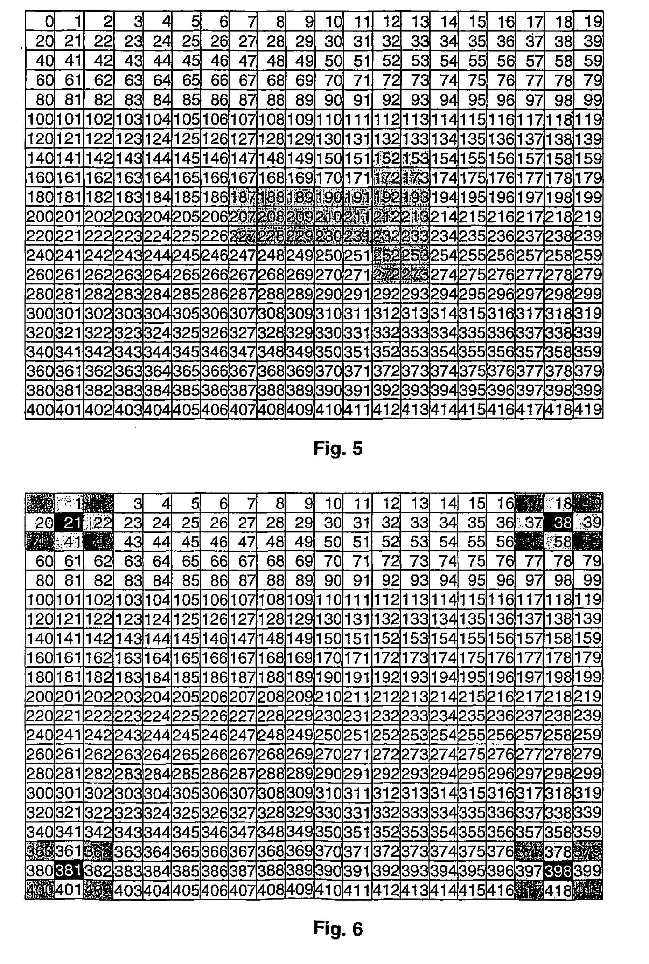

Im Rahmen der Komprimierung werden nun zunächst die mit Priorität A versehenden Pixelgruppen übertragen bzw. abgespeichert, dann die Pixelgruppen mit Priorität B und schließlich die Pixelgruppen mit der Priorität C. Da sich das Objekt zwischenzeitlich bewegt und in Bezug zu Figur 3 in den Figuren 4 und 5 eine andere Position einnimmt, ändern sich die Prioritäten der einzelnen Pixelgruppen. Die Prioritätenliste wird aktualisiert und es wird sofort mit der Übertragung der aktuellen Pixelgruppen mit der höchsten Priorität fortgefahren.
Die neu berechneten Prioritäten der Pixelgruppen für die Zeitpunkte t2 (Figur 4) und t3 (Figur 5) sind in Tabelle 1 dargestellt.

Somit könnte eine mögliche komprimierte Übertragung eines Videosignals gemäß Tabelle 1 folgendermaßen aussehen:
Zeitpunkt t1: Pixelgruppen mit der höchsten Priorität A werden übertragen: 175, 255, 231, 191, 156, 157, 277, 276, 177, 197, 217
Zum Zeitpunkt t2 werden neue Prioritäten erkannt. Andere Pixelgruppen erhalten höchste Priorität A. Es wird mit der Übertragung der neuen Priorität A fortgefahren: 189,173,154,155, 274,275,253,229
Danach folgt die Übertragung der Pixelgruppen mit Priorität B: 175,195,215,235,255,190,191,192,193, ...
Zum Zeitpunkt t3 werden wieder neue Prioritäten erkannt. Andere Pixelgruppen erhalten höchste Priorität A. Es wird mit der Übertragung der neuen Priorität A fortgefahren: 187,171,227,251, 152,153,272,273

In einem zusätzlichen Array wird überprüft, welche Pixelgruppen bereits übertragen worden sind. Wurde eine Pixelgruppe schon übertragen, braucht Sie nicht ein 2tes mal übertragen werden, sofern sich ihre Priorität nicht zwischenzeitlich geändert hat. Bestimmte Bildregionen, z.B. Gesichter, können erkannt und bevorzugt übertragen werden. Zusätzlich können von dem Empfänger auch bestimmte Pixelgruppen angefordert werden (z.B. bei Erkennung von Übertragungsfehleren durch fehlerhaften CRC Check). Derart angeforderte Pixelgruppen können dann eine hohe Priorität erhalten, so dass Sie sofort Übertragen wird.

### Pixelgruppen abspeichern / übertragen

Die Begriffe "abspeichern" und "übertragen" werden nachfolgend synonym verwendet. Zunächst werden einige Kenngrößen des Videobildes abgespeichert bzw. übertragen. Exemplarisch aufgeführt sind das z.B.:
- Bildbreite (in Pixel)
- Bildhöhe (in Pixel)
- Verwendete Form der Pixelgruppe (nicht notwendig wenn nur eine Form standardisiert ist)

Anschließend werden die einzelnen Pixelgruppen entsprechend ihrer Priorität abgespeichert bzw. übertragen, d.h. Pixelgruppen mit hoher Priorität werden zuerst gespeichert (und später auch zuerst ausgelesen).
Dazu wird zunächst der Positionswert des Bezugspixels p0 der Pixelgruppe abgespeichert. Anschließend werden die Pixelwerte P0, P1, P2, P3, P4 abgespeichert.

### Beispiel:

Positionswert P0, Pixelwerte P0, P1, P2, P3, P4; nächster Positionswert P0 (mit gleicher oder niedrigerer Priorität), Pixelwerte P0, P1, P2, P3, P4, ... , nächster Positionswert P0 (mit geringster Priorität), Pixelwerte P0, P1, P2, P3, P4.

Das Abspeichern kann durch verschiedene Methoden, die hier nur exemplarisch angesprochen werden, optimiert werden.
Es kann eine Lauflängencodierung der Pixelgruppen vorgenommen werden. Z.B. wenn in einem Bildbereich keine Rotanteile vorkommen, kann dies anstelle von 8 Bit (rot) nur mit z.B. 2 Bit übertragen werden, oder es kann die Anzahl der führenden Nullen ausgenutzt werden.
Ferner können allgemein übliche Komprimierungsmethoden, z.B. Zip-Format, verwendet werden.
Durch Festlegung eines Grenzwertes für die Priorisierung kann eine bestimmte Qualität gewährleistet werden. Z.B. kann ein Grenzwert für die Pixeldifferenzwerte festgelegt werden unterhalb dessen die zugeordnete Pixelgruppe immer den niedrigsten Prioritätswert bekommt.
Werden zunächst die 4 Pixelgruppen der Eckpunkte übertragen, bekommt man mit wenigen Pixelgruppen eine größtmögliche Fläche berechnet.

### Rekonstruktion (Dekomprimierung) der Videodaten

### Neues Bildarray generieren

Bei der Rekonstruktion der komprimierten Videodaten wird zunächst ein Bildarray vergleichbar mit der Darstellung in Figur 1 erzeugt. Dazu werden die Kenndaten des Bildes eingelesen und ausgewertet. Exemplarisch sind dies Bildbreite, Bildhöhe und Form der zur Komprimierung verwendeten Pixelgruppe. Stimmen die Bildhöhe und Bildbreite zwischen dem Ursprungsbild und der nun gewünschten Darstellung (z.B. begrenztes PDA Display oder hochauflösender Bildschirm) nicht überein, muss entsprechend skaliert werden.

Dazu werden zunächst Umrechnungsfaktoren ermittelt (Bildbreite_Orginal / Bildbreite_Display und Bildhöhe_Orginal / Bildhöhe_Display). Diese Faktoren können benutzt werden um den Positionswert von dem Originalbild in den Positionswert des neuen Displays umzurechnen.

### Pixelgruppen einfügen

Wie in Figur 6 dargestellt ist, werden entsprechend der Reihenfolge der priorisierten Pixelgruppen diese nun eingelesen. Beispielsweise werden die ersten vier Pixelgruppen mit der höchsten Priorität in das Bildarray eingetragen. In Figur 6 sind dies die Pixelgruppen an den Ecken des Bildes. Die Position des Bezugspixels p0 der jeweiligen Pixelgruppe ist durch die schwarz unterlegten Felder 21, 38, 381 bzw. 398 bestimmt. Dieser Positionswert (p0) liegt als Integerwert in der abgespeicherten Datei vor. Anschließend können die zur jeweiligen Pixelgruppe gehörenden, dunkelgrau grau unterlegten Pixelwerte (p1-p4) in das neue Bildarray eingetragen werden. Die dazwischen liegenden, hellgrau markierten Pixelwerte lassen sich dann aus den dunkelgrau und schwarz markierten Feldern berechnen. Zur Berechnung werden zunächst die bekannten Pixelwerte in ihre Bestandteile Rot, Grün und Blau zerlegt. Anschließend wird der Mittelwert jeder Farbe berechnet, z.B. Pixel(22) = (Pixel(2) + Pixel(21) + Pixel(42))/3).

### Flächen ausfüllen

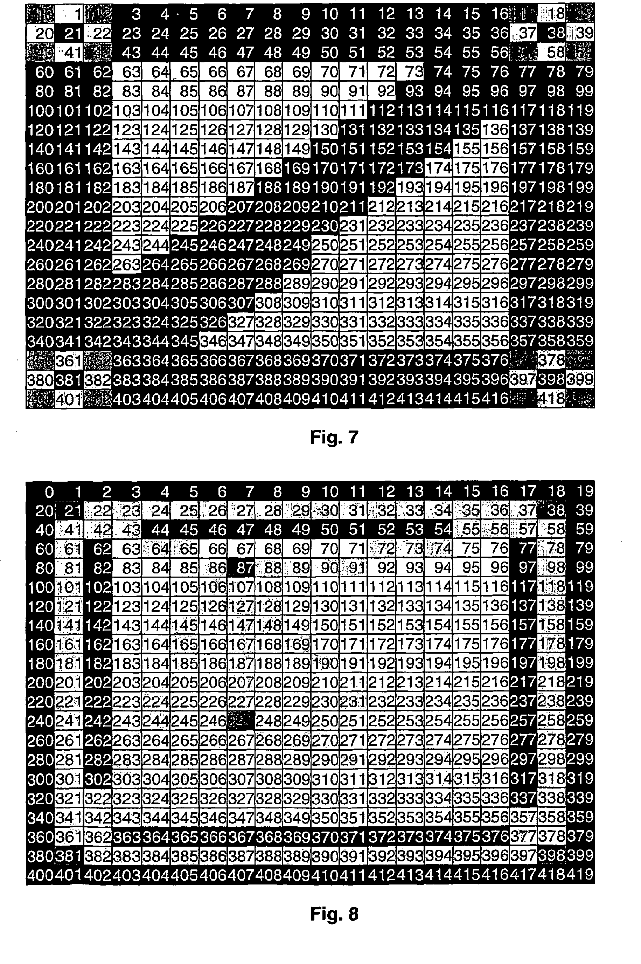

Nun werden die bereits vorhandenen Pixelgruppen durch Linien miteinander verbunden. Dies ist in Figur 7 dargestellt. Es ergeben sich Dreiecke, dessen Ecken durch die entsprechenden Pixelgruppen definiert sind. Exemplarisch soll dies an der Linie zwischen Pixelposition 2 und Pixelposition 17 verdeutlicht werden. Der Farbverlauf der Linie wird anhand der Farbwerte der Pixel 2 und 17 berechnet. Zunächst wird die Anzahl der Pixel zwischen diesen beiden Positionen ermittelt, im Beispiel 14. Anschließend wird für jede Farbe (Rot, Grün, Blau) die Farbdifferenz ermittelt, z.B. Farbwert an Position 2 = 2; Farbwert an Position 17 = 30 ergibt Farbdifferenz von 28). Eine Farbwertsteigerung pro Pixel - vom Pixel 2 zum Pixel 17 - errechnet sich dann aus Farbdifferenz / Anzahl (Im Beispiel 28/14 = 2).

Die noch übrigen Flächen werden durch Zeichnen von horizontalen Linien ausgefüllt, z.B. von Position 63 nach Position 74, von Position 82 nach Position 93, usw. Auch hier wird ein vorläufiger Farbverlauf zwischen den Punkten wie oben angegeben berechnet,

Wie Figur 8 zeigt, ergibt jede weitere hinzufügte Pixelgruppe weitere Dreiecke die entsprechend ausgefüllt werden können. Nachdem zunächst die gesamte Fläche durch Nutzung der 4 Eckpunkte (21, 38, 398, 381) ausgefüllt wurde, kann nun mit jeder weiteren Pixelgruppe die Auflösung verfeinert werden. Das Hinzufügen der Pixelgruppe 87 führt zu 4 Dreiecken mit den Bezugspunkten (21, 38, 87), (21, 87, 381), (381, 87, 398), (398, 78, 38). Wird nun innerhalb eines solchen Dreieckes, z.B. 87, 381, 398, eine weitere Pixelgruppe (247) eingefügt entstehen 3 neue Dreiecke (247,381,398), (247, 87, 381) und (247,87, 398). Jede neue Pixelgruppe erzeugt somit 3 neue Dreiecke, die ausgefüllt werden können. Je mehr Pixelgruppen eingefügt sind, d.h. je mehr Dreiecke gebildet werden, desto näher kommt der berechnete Farbverlauf dem tatsächlichen Farbverlauf des Bildes. Da ab nun immer nur neue Dreiecke entstehen, können für die Berechnungen optimierte Verfahren verwendet werden. Ferner können die jeweils 3 neu entstehenden Dreiecke parallel berechnet werden, um die Bearbeitungsgeschwindigkeit zu steigern. Zusätzliche Möglichkeit der Parallelisierung entsteht dadurch, wenn neue Pixelgruppen in unterschiedlichen Regionen des Bildes hinzugefügt werden.

Bei den oben beschriebenen Verfahrenschritten wurde vorausgesetzt, dass sich der Bildinhalt zwischenzeitlich nicht geändert hat. Ändert sich der Bildinhalt, dann werden die Prioritäten der einzelnen Pixelgruppen neu verteilt und die aktuellen Pixelgruppen mit der höchsten Priorität übertragen. Es ändert sich nur die Reihenfolge der gerade übertragenen und in das Bild eingefügten Pixelgruppen. Am oben beschriebenen Prinzip der Rekonstruktion des Bildes ändert sich jedoch nichts.

Um den zeitlichen Änderungen des Bildinhalts Rechnung zu tragen, können jedoch noch zusätzliche Arrays (mit der Größe des Bildarrays) erzeugt werden. Diese können Angaben enthalten über die
- Zeit, d.h. wann wurde ein Pixelwert zuletzt berechnet bzw. übertragen
- Berechnungsgrundlage. Welche übertragenen Pixel wurden zur Berechnung des Pixelwertes benutzt
- Wahrscheinlichkeit/Genauigkeit. Wurde ein Pixelwert übertragen oder berechnet; falls er berechnet wurde wie groß ist die Varianz der Pixelgruppen aus denen der neue Wert berechnet wurde?
- Abweichung von schon kalkulierten Pixelwerten mit dann übertragenden Pixelwerten

Aus diesen Größen lassen sich dann Bildregionen bestimmen in denen häufig Pixelgruppenänderungen vorkommen. Benachbarte Pixelgruppen, oder auch komplette Bereiche werden in aller Regel ähnlichen Veränderungen, z.B. Helligkeitsänderungen, Farbänderungen unterliegen. Durch Auswertung dieser Änderungen lassen sich in aller Regel Objekte und ihr dynamisches Verhalten bestimmen, z.B. Gegenstand der sich im Video bewegt. Gleichmäßige Änderungen bezogen auf das gesamte Bildarray können zum Beispiel auf einen Kameraschwenk hinweisen. Werden diese Informationen z.B. mit Hilfe von lernfähigen neuronalen Netzen ausgewertet, lassen sich sehr leicht Abschätzungen über die Pixelwerte von noch nicht übertragenden Pixelgruppen machen. Treffen diese Abschätzungen zu, können Pixelgruppen identifiziert werden, die besonderen Einfluss auf Veränderungen auf Objekte besitzen. Werden diese Pixelgruppen von der Quelle erneut angefragt, ist es möglich Objektbewegungen mit nur wenig Pixelgruppen genau zu bestimmen und vorherzusagen. In der Praxis bedeutet es, dass obwohl nur eine niedrige Bandbreite zur Verfügung steht, niedrige Verzögerungszeiten auftreten, die wesentlich geringer sind als bei Frame-basierten Verfahren. Die Auswertung der zusätzlich im Empfänger generierten Arrays erlaubt auch eine gute Objekterkennung.

In Abhängigkeit der verfügbaren Ressourcen können neben der reinen Priorisierung durch die Farbwerte benachbarter Pixel auch Abhängigkeiten der Lage der priorisierten Pixelgruppen herangezogen werden.
Ein Anwendungsfall soll dies verdeutlichen. Betrachtet man auf See einen Horizont, erscheint dieser wie eine waagerechte Linie. Es ist zu erwarten, dass die Prioritätswerte jeder Pixelgruppe entlang diesem Horizont in etwa gleich sind. In diesem Fall besitzen die am weitesten auseinander liegenden Punkte der Horizontlinie die größte Aussagekraft. Durch Übertragung der äußersten linken und äußersten rechten Pixelgruppen des Horizonts ist es schon möglich, diesen wieder zu rekonstruieren.

Eine weitere Möglichkeit der Priorisierung liegt in der Höherbewertung bestimmter Bildbereiche. Ein solcher Bildbereich können zum Beispiel Gesichter sein. Obwohl Gesichter auf Urlaubsvideos manchmal nur einen prozentual kleinen Bereich des gesamten Bildes ausmachen, stehen sie beim Betrachten meist im Mittelpunkt. Ein solches menschliches Sehverhalten kann durch entsprechende Priorisierung der Pixelgruppen dieser Bildbereiche (Gesichtsbereiche) berücksichtigt werden. Ebenso können die Pixelgruppen im Zentrum des Videos eine entsprechend höhere Priorisierung erfahren.

Eine weitere Möglichkeit der Optimierung besteht in der Tatsache, dass sich benachbarte Pixelgruppen gegenseitig überlagern. Durch geschickte Auswahl der Pixelgruppen kann vermieden werden, dass sich überlagernde Pixelwerte benachbarten Pixelgruppen wiederholt übertragen werden.

Der Aufwand der zum Dekodieren verwendet wird, ist frei skalierbar. Bei kleineren Displays (z.B. Handys ) ist sicherlich weniger Rechenaufwand notwendig als die Wiedergabe auf einem hochauflösendem Großbildschirm, obwohl beide den gleichen Quelldatenstrom, bestehend aus den priorisierten Pixelgruppen, verwenden. Diese flexible Skalierung erlaubt es Herstellern von Endgeräten, spezielle Optimierungen, z.B. Anzahl der Objekte, Historie der Bildänderungen, in ihre Geräte einzubauen. Für die Hersteller ergibt sich eine Möglichkeit, sich von ihren Mitbewerbern abzuheben, ohne die Kompatibilität der Videoübertragung zu gefährden.

## Patentansprüche

1. Verfahren zur Komprimierung von Videodaten, die aus einem Array einzelner Bildpunkte (Pixel) bestehen, wobei jedes Pixel (0-419) einen sich zeitlich verändernden Pixelwert aufweist, der Farb- oder Helligkeitsinformation des Pixels beschreibt,
**gekennzeichnet durch** die Schritte:
a) Ermitteln eines Prioritätswertes für jedes Pixel des Arrays **durch** Festlegen des verwendeten Pixels als Bezugspixel (P0) und Berechnen eines Pixeldifferenzwertes anhand des jeweils momentanen Pixelwerts des Bezugspixels (P0) in Bezug auf die momentanen Pixelwerte einer zuvor festgelegten Gruppe von benachbarten Pixeln (P1-P4);
b) Zusammenfassen der für die Berechnung des Prioritätswertes hinzugezogenen Pixel (P0-P4) zu einer Pixelgruppe,
c) Sortieren der Pixelgruppen anhand des Prioritätswertes des zugeordneten Bezugspixels (P0) und Ablegen in einem Prioritätenarray;
d) Abspeichern und/oder Übertragen der Pixelgruppen entsprechend ihrer Priorität im Prioritätenarray, wobei je nach dem angestrebten Kompressionsfaktor nur ein Teil der Pixelgruppen abgespeichert und/oder übertragen wird,
wobei die Schritte a) bis d) ständig wiederholt werden, wobei die Prioritätswerte der Pixelgruppen stets neu ermittelt werden und das Prioritätenarray zu jedem Zeitpunkt die nach aktuellen Prioritäten sortierten Pixelgruppen enthält.

2. Verfahren nach Anspruch 1, **dadurch gekennzeichnet, dass** der Pixeldifferenzwert sich aus der Differenz des Pixelwerts eines betrachteten Pixels zum Pixelwert jedes seiner betrachteten Nachbarpixel der Pixelgruppe ergibt.

3. Verfahren nach einem dervorhergehenden Ansprüche, **dadurch gekennzeichnet, dass** zu Beginn die Kenngrößen des Videobildes, wie Bildbreite in Pixel, Bildhöhe in Pixel und Form der verwendeten Pixelgruppe abgespeichert und/oder übertragen werden.

4. Verfahren nach einem der vorhergehenden Ansprüche, **dadurch gekennzeichnet, dass** für jede Pixelgruppe die Position eines Bezugspixels (P0), dessen Pixelwert, sowie der Pixelwert der übrigen Pixel (P1-P4) der Pixelgruppe abgespeichert oder übertragen wird.

5. Verfahren nach einem der vorhergehenden Ansprüche, **dadurch gekennzeichnet, dass** Pixelgruppen bestimmter Bildbereiche eine erhöhte Priorität zugeordnet wird.

6. Verfahren nach einem der vorhergehenden Ansprüche, **dadurch gekennzeichnet, dass** die Pixelwerte der Pixelgruppen durch Lauflängencodierung oder andere Kompressionsverfahren weiter komprimiert werden.

7. Verfahren nach einem der vorhergehenden. Ansprüche, **dadurch gekennzeichnet, dass** die laufende Ermittlung und Ausgabe der nach Prioritäten sortierten Pixelgruppen bereits durch ein verwendetes bildaufnehmendes System, wie z.B. Scanner, CCD-Kamera, erfolgt.

8. Verfahren nach einem der vorhergehenden Ansprüche, **dadurch gekennzeichnet, dass** Framegrabber Karten (bzw. Softwarelösungen) eingesetzt werden können, um auch vorliegendes Videomaterial verschiedenster Formate (z.B. AVI, MPEG-1, MPEG-2, MPEG-4,...) zu konvertieren.

9. Verfahren zur Rekonstruktion von Videodaten, die mit dem Verfahren gemäß den Ansprüchen 1 bis 8 komprimiert wurden,
**dadurch gekennzeichnet,**
**dass** die jeweils eingelesenen Pixelwerte in Form eines Bildarrays dargestellt werden, wobei die noch nicht übertragenden Pixel aus den schon übertragenden Pixeln berechnet werden.

10. Verfahren nach Anspruch 9,
**gekennzeichnet durch** die Schritte:
a) Generieren eines leeren Bildarrays aus den eingelesenen Kenngrößen des komprimierten Videobildes,
b) Kontinuierliches Einlesen der abgespeicherten bzw. übertragenen Pixelgruppen und Einfügen in das Bildarray,
c) Bilden von Dreiecken **durch** Verbinden von jeweils drei unmittelbar benachbarter Pixelgruppen **durch** mindestens eine Linie,
d) Ausfüllen der die Fläche der Dreiecke bildenden Pixel **durch** einen aus den das Dreieck bildenden Pixelgruppen berechneten Farb- und/oder Helligkeitsverlauf, und
e) Wiederholen der Schritte b) bis e)

11. Verfahren nach einem der Ansprüche 9 oder 10, **dadurch gekennzeichnet, dass** die Dreiecke in ihrer Größe skalierbar und an unterschiedliche Bildauflösungen anpassbar sind.

12. Verfahren nach einem der Ansprüche 9 bis 11, **dadurch gekennzeichnet, dass** zusätzliche Arrays erzeugt werden können, die Angaben enthalten über die:
- Zeit, d.h. wann wurde ein Pixelwert zuletzt berechnet bzw. übertragen,
- Berechnungsgrundlage, d.h. welche übertragenen Pixel wurden zur Berechnung des Pixelwertes benutzt,
- Wahrscheinlichkeit/Genauigkeit, d.h. wurde ein Pixelwert übertragen oder berechnet; falls er berechnet wurde, wie groß ist die Varianz der Pixelgruppen aus denen der neue Wert berechnet wurde,
- Abweichung von schon kalkulierten Pixelwerten mit dann übertragenden Pixelwerten.

13. Verfahren nach einem der Ansprüche 9 bis 12, **dadurch gekennzeichnet, dass** anhand der gemäß Anspruch 12 erzeugten Arrays, auf einfache Art Bewegungsprofile und Objekte erkannt werden können.

14. Verfahren nach Anspruch 13, **dadurch gekennzeichnet, dass** durch Auswertung der Bewegungsprofile und Objekte flüssige Bewegungen mit extrem niedrigen Latenzzeiten, trotz niedrigster Übertragungsraten erzielt werden können.

## Claims

1. Process for compressing video data which consist of an array of individual picture elements (pixels), wherein each pixel (0-419) has a temporally changing pixel value, which describes colour or brightness information of the pixel, **characterised by** the steps:
a) determining a priority value for each pixel of the array by establishing the pixel used as a reference pixel (P0) and calculating a pixel differential value using the particular instantaneous pixel value of the reference pixel (P0) with reference to the instantaneous pixel values of a previously established group of adjacent pixels (P1-P4);
b) combining the pixels (P0-P4) used to calculate the priority value to form a pixel group,
c) sorting the pixel groups using the priority value of the assigned reference pixel (P0) and filing in a priority array;
d) storing and/or transmitting the pixel groups corresponding to their priority in the priority array, wherein depending on the compression factor required, only some of the pixel groups are stored and/or transmitted,
wherein the steps a) to d) are constantly repeated, wherein the priority values of the pixel groups are always re-determined and the priority array contains the pixel groups sorted according to current priorities at each point in time.

2. Process according to claim 1, **characterised in that** the pixel differential value is produced from the difference of the pixel value of an observed pixel from the pixel value of each of its observed adjacent pixels of the pixel group.

3. Process according to one of the preceding claims, **characterised in that** at the start, the parameters of the video image, such as image width in pixels, image height in pixels and form of the pixel group used, are stored and/or transmitted.

4. Process according to one of the preceding claims, **characterised in that** for each pixel group, the position of a reference pixel (P0), its pixel value, and the pixel value of the remaining pixels (P1-P4) of the pixel group, is stored or transmitted.

5. Process according to one of the preceding claims, **characterised in that** an increased priority is assigned to pixel groups of certain image regions.

6. Process according to one of the preceding claims, **characterised in that** the pixel values of the pixel groups are further compressed by run-length coding or other compression processes.

7. Process according to one of the preceding claims, **characterised in that** the continuous determination and output of pixel groups sorted according to priorities is effected even by an image-recording system used, such as for example scanner, CCD camera.

8. Process according to one of the preceding claims, **characterised in that** framegrabber cards (or software solutions) may be used in order to also convert existing video material of the widest variety of formats (for example AVI, MPEG-1, MPEG-2, MPEG-4, ...).

9. Process for the reconstruction of video data, which has been compressed by the process according to claims 1 to 8, **characterised in that** the particular pixel values read-in are shown in the form of an image array, wherein the pixels not yet being transmitted are calculated from the pixels already being transmitted.

10. Process according to claim 9, **characterised by** the steps:
a) generating an empty image array from the read-in parameters of the compressed video image,
b) continuous reading-in of the stored or transmitted pixel groups and insertion into the image array,
c) forming triangles by joining in each case three directly adjacent pixel groups by at least one line,
d) filling-in the pixels forming the surface area of the triangles by a colour and/or brightness course calculated from the pixel groups forming the triangle, and
e) repeating the steps b) to e).

11. Process according to one of claims 9 or 10, **characterised in that** the triangles can be scaled in their size and adapted to different image resolutions.

12. Process according to one of claims 9 to 11, **characterised in that** additional arrays may be produced, which contain details about the:
- time, that is, when was a pixel value last calculated or transmitted,
- calculation basis, that is, which transmitted pixels have been used to calculate the pixel value,
- probability/accuracy, that is, was a pixel value transmitted or calculated; if it was calculated, how great is the variance of the pixel groups from which the new value was calculated,
- deviation from already calculated pixel values with pixel values then being transmitted.

13. Process according to one of claims 9 to 12, **characterised in that** using the arrays produced according to claim 12, movement profiles and objects may be recognised in simple manner.

14. Process according to claim 13, **characterised in that** by evaluating the movement profiles and objects, fluid movements with extremely low latency times may be achieved in spite of the lowest transmission rates.

## Revendications

1. Procédé de compression de données vidéo qui se composent d'un ensemble de points d'image individuels (pixels), chaque pixel (0-419) présentant une valeur de pixel variable dans le temps qui décrit les informations de couleur ou de luminosité du pixel,
**caractérisé par** les étapes suivantes :
a) recherche d'une valeur de priorité pour chaque pixel de l'ensemble grâce à la détermination du pixel utilisé, comme pixel de référence (P0), et au calcul d'une valeur de différence de pixel à l'aide de la valeur de pixel momentanée du pixel de référence (P0) par rapport aux valeurs de pixel momentanées d'un groupe fixé précédemment de pixels voisins (P1-P4) ;
b) regroupement des pixels (P0-P4) utilisés pour le calcul de la valeur de priorité, en un groupe de pixels,
c) tri des groupes de pixels à l'aide de la valeur de priorité du pixel de référence associé (P0) et mémorisation dans un ensemble de priorité ;
d) mise en mémoire et/ou transmission des groupes de pixels suivant leur priorité dans l'ensemble de priorité, étant précisé que suivant le facteur de compression recherché, une partie seulement des groupes de pixels sont mis en mémoire et/ou transmis,
les étapes a) à d) étant reprises constamment, les valeurs de priorité des groupes de pixels étant constamment recalculées et l'ensemble de priorité contenant à tout moment les groupes de pixels triés suivant les priorités actuelles.

2. Procédé selon la revendication 1, **caractérisé en ce que** la valeur de différence de pixels résulte de la différence de la valeur d'un pixel considéré, par rapport à la valeur de chacun de ses pixels voisins considérés du groupe de pixels.

3. Procédé selon l'une des revendications précédentes, **caractérisé en ce qu'**au début, les grandeurs caractéristiques de l'image vidéo telles que la largeur d'image en pixels, la hauteur d'image en pixels et la forme du groupe de pixels utilisé sont mises en mémoire et/ou transmises.

4. Procédé selon l'une des revendications précédentes, **caractérisé en ce que** pour chaque groupe de pixels sont mises en mémoire ou transmises la position d'un pixel de référence (P0), sa valeur de pixel et la valeur de pixel des autres pixels (P1-P4) du groupe de pixels.

5. Procédé selon l'une des revendications précédentes, **caractérisé en ce qu'**une priorité plus grande est attribuée à des groupes de pixels de zones d'image définies.

6. Procédé selon l'une des revendications précédentes, **caractérisé en ce que** les valeurs de pixel des groupes de pixels sont encore comprimées grâce à codage de longueur ou à d'autres procédés de compression.

7. Procédé selon l'une des revendications précédentes, **caractérisé en ce que** la recherche et la sortie permanentes des groupes de pixels triés par priorités se font déjà grâce à un système de prise de vue utilisé, comme par exemple un scanner, une caméra à dispositif à transfert de charge.

8. Procédé selon l'une des revendications précédentes, **caractérisé en ce qu'**on peut utiliser des cartes à capteur d'image (ou des solutions de logiciel) pour convertir aussi un matériau vidéo existant des formats les plus divers (par exemple AVI, MPEG-1, MPEG-2, MPEG-4,...).

9. Procédé de reconstruction de données vidéo qui ont été comprimées à l'aide du procédé selon les revendications 1 à 8, **caractérisé en ce que** les valeurs de pixels entrées sont représentées sous la forme d'une matrice d'image, les pixels qu'il reste à transmettre étant calculés à partir des pixels déjà transmis.

10. Procédé selon la revendication 9, **caractérisé par** les étapes suivantes :
a) production d'une matrice d'image vide à partir des grandeurs caractéristiques entrées de l'image vidéo comprimée,
b) entrée continue des groupes de pixels mis en mémoire ou transmis et insertion dans la matrice d'image,
c) formation de triangles grâce à la liaison de trois groupes de pixels directement voisins, à l'aide d'au moins une ligne,
d) remplissage des pixels formant la surface des triangles à l'aide d'une courbe de couleur et/ou de luminosité calculée à partir des groupes de pixels formant le triangle, et
e) reprise des étapes b) à e).

11. Procédé selon la revendication 9 ou 10, **caractérisé en ce que** la taille des triangles peut être mise à l'échelle et les triangles peuvent être adaptés à différentes résolutions d'image.

12. Procédé selon l'une des revendications 9 à 11, **caractérisé en ce que** des matrices supplémentaires peuvent être produites, qui contiennent des indications sur :
- le temps, c'est-à-dire qui indiquent quand une valeur de pixel a été calculée ou transmise en dernier,
- la base du calcul, c'est-à-dire qui indiquent quels pixels transmis ont été utilisés pour le calcul de la valeur de pixel,
- la probabilité/la précision, c'est-à-dire qui indiquent si une valeur de pixel a été transmise ou calculée ; et, au cas où elle a été calculée, le degré de variance des groupes de pixels à partir desquels la nouvelle valeur a été calculée,
- l'écart entre des valeurs de pixels déjà calculées et des valeurs de pixels transmises ensuite.

13. Procédé selon l'une des revendications 9 à 12, **caractérisé en ce qu'**à l'aide des matrices produites selon la revendication 12, des profils de mouvement et des objets peuvent être détectés simplement.

14. Procédé selon la revendication 13, **caractérisé en ce que** grâce à l'évaluation des profils de mouvements et des objets, on peut obtenir des mouvements fluides avec des temps de latence extrêmement faibles, malgré des débits très bas.
